Europäisches Patentamt

**European Patent Office**

**Office européen des brevets**

(11) Numéro de publication: **0 294 270 B1**

(12) **FASCICULE DE BREVET EUROPEEN**

(45) Date de publication de fascicule du brevet: **21.10.92** (51) Int. Cl.⁵: **G02B 6/38**, C03B 37/16

(21) Numéro de dépôt: **88401244.4**

(22) Date de dépôt: **20.05.88**

(54) **Procédé de mise en place d'une fibre optique dans un élément de connecteur de fibres optiques, et élément de connecteur pour la mise en oeuvre du procédé.**

(30) Priorité: **21.05.87 FR 8707138**

(43) Date de publication de la demande:
**07.12.88 Bulletin 88/49**

(45) Mention de la délivrance du brevet:
**21.10.92 Bulletin 92/43**

(84) Etats contractants désignés:
**CH DE GB IT LI SE**

(56) Documents cités:
**EP-A- 0 063 085          EP-A- 0 137 665**
**FR-A- 2 426 920          GB-A- 2 052 790**
**US-A- 4 168 109          US-A- 4 644 647**

(73) Titulaire: **RADIALL, Société Anonyme dite:**
**101, rue Philibert Hoffmann Zone Industrielle**
**Ouest**
**F-93116 Rosny-Sous-Bois(FR)**

(72) Inventeur: **Zajac, Elie**
**9, Résidence la Roseraie**
**F-93220 Gagny(FR)**
Inventeur: **L'autre inventeur a renoncé àsa**
**désignation**

(74) Mandataire: **Leszczynski, André et al**
**CABINET NONY & CIE. 29 rue Cambacérès**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

# Description

La présente invention est relative à un procédé de mise en place d'une fibre optique dans un élément de connecteur et plus précisément un élément de connecteur du type destiné à être assemblé en regard d'un élément de connecteur identique dans un élément de raccordement pour assurer la connexion de deux fibres optiques immobilisées chacune dans l'un des éléments de connecteur.

L'élément de connecteur pour la mise en oeuvre du procédé selon l'invention est du type comportant un écrou périphérique d'assemblage, un corps, dont la surface d'extrémité frontale définit un plan de référence, muni à son extrémité arrière de moyens de retenue d'une fibre optique introduite par l'arrière dudit corps, un embout dans lequel l'extrémité dénudée de la fibre optique est susceptible d'être positionnée étant logé dans ledit corps et faisant axialement saillie de celui-ci vers l'avant, la face d'extrémité frontale dudit embout se trouvant à une distance axiale prédéterminée dudit plan de référence, ledit embout étant mobile axialement par rapport au corps à l'encontre d'un organe élastique de rappel logé dans le corps.

Dans de tels éléments de connecteurs la distance de référence c'est-à-dire la distance mentionnée ci-dessus entre la face frontale de l'embout et le plan de référence défini par la surface d'extrémité frontale du corps doit être respectée avec précision car elle est normalisée.

L'extrémité dénudée de la fibre optique doit se trouver dans le plan de la face d'extrémité de l'embout ou de préférence se situer en retrait d'une distance prédéterminée, par exemple de 20 $\mu$m par rapport à cette surface d'extrémité.

La technique couramment utilisée pour assurer une coincidence de l'extrémité dénudée de la fibre optique et de la face d'extrémité de l'embout de l'élément de connecteur consiste à coller la fibre dénudée dans le trou axial de l'embout dans lequel elle est introduite par l'arrière et dont elle dépasse axialement vers l'avant, et à éliminer la partie saillante de la fibre par polissage à l'aide d'un calibre approprié.

Cette technique ne convient pas lorsque l'on cherche à maintenir l'extrémité dénudée de la fibre à une certaine distance en retrait de la face frontale d'extrémité de l'embout.

La société déposante a décrit dans son brevet européen 0011561 un procédé pour immobiliser une fibre optique dans un embout de connecteur avec un léger retrait par rapport à l'extrémité par fracture de la fibre optique, en réalisant à l'aide d'un outil approprié une rayure sur l'extrémité dénudée de la fibre en retrait de l'extrémité de l'embout, puis en exerçant une traction axiale sur la fibre pour sectionner celle-ci.

La technique décrite dans ce brevet européen convient pour des fibres comportant un revêtement ou cladding relativement mou dans la mesure où elle nécessite une légère compression du revêtement mais n'est pas directement utilisable pour des fibres présentant un revêtement dur.

Cette technique de sectionnement de fibres par fracture, en elle-même connue, par example par GB-A-2 052 090 est, par ailleurs dans la pratique difficile à mettre en oeuvre par suite de la difficulté de contrôler avec précision l'emplacement et la profondeur de la rayure sur la fibre par suite des dimensions importantes de l'outil par rapport à celles de l'embout et de la fibre.

La présente invention se propose de réaliser un procédé par lequel une fibre optique peut être mise en place dans un élément de connecteur de manière que son extrémité se trouve en retrait d'une distance prédéterminée de la face d'extrémité de l'embout ou dans le plan de cette face d'extrémité et ce, de manière particulièrement simple rapide et fiable.

Le procédé selon l'invention se caractérise par le fait qu'après avoir dénudé l'extrémité d'une fibre optique on la met en place par l'arrière dans l'élément de connecteur de manière qu'elle fasse saillie axialement de l'extrémité frontale de l'embout, on immobilise à l'arrière du corps du connecteur la fibre optique dans sa partie non dénudée, on engage sur l'embout, de préférence par vissage de l'écrou périphérique d'assemblage un calibre présentant un alésage central de diamètre correspondant au diamètre extérieur de l'embout, le calibre comportant une première surface d'extrémité destinée à venir en appui contre la surface du corps de l'élément de connecteur définissant le plan de référence et une deuxième surface d'extrémité distante de la première d'une distance inférieure d'une valeur prédéterminée à la distance sur l'élément de connecteur entre la face frontale de l'embout et le plan de référence, de manière que lorsque le calibre est engagé l'embout se trouve reculé par rapport au corps de ladite valeur de différence prédéterminée, on réalise dans cette position sur la fibre en saillie du calibre, le long de la seconde surface d'extrémité de celui-ci, une rayure à l'aide d'un outil approprié, on exerce une traction axiale sur la fibre pour fracturer celle-ci au niveau de la rayure, après quoi on retire ledit calibre, l'embout revenant sous l'effet de l'organe d'appui élastique dans sa position initiale, l'extrémité de la fibre optique se trouvant alors en retrait de l'extrémité de l'embout d'une distance correspondant à la valeur de différence prédéterminée.

L'élément de connecteur est alors prêt à l'emploi et il suffit de le mettre en place dans un élément de raccordement correspondant.

L'élément de connecteur pour la mise en oeuvre de ce mode de réalisation se caractérise avantageusement par le fait que l'embout présente à son extrémité arrière une collerette annulaire de plus grand diamètre dont la face frontale est susceptible de venir en appui contre une surface de butée formée par un décrochement de l'alésage du corps de l'élément de connecteur sous l'action d'un organe élastique logé dans le corps et constitué par exemple par des rondelles élastiques, en appui axial contre la face arrière de ladite collerette.

L'immobilisation de la fibre optique dans sa partie non dénudée à l'arrière du corps de connecteur peut s'effectuer par tout moyen approprié par exemple par collage ou par serrage mécanique, par exemple par pincement à l'aide d'un organe de blocage comportant une partie tubulaire fendue de serrage présentant une surface extérieur tronconique coopérant avec la surface d'un alésage tronconique réalisé à la partie arrière du corps.

D'autres avantages et caractéristiques de l'invention apparraîtront à la lecture de la description suivante d'un exemple de réalisation en se référant au dessin annexé dans lequel :
- la figure 1 est une vue en coupe illustrant un élément de connecteur pour la mise en oeuvre d'un premier mode de réalisation de l'invention avant mise en place d'une fibre optique,
- la figure 2 illustre l'élément de connecteur après mise en place de la fibre optique,
- la figure 3 illustre la phase suivante de sectionnement en utilisant un calibre,
- la figure 4 est une vue en élévation et demicoupe du calibre utilisé dans la figure 3,
- la figure 5 est une vue en bout du calibre, et
- la figure 6 illustre l'élément de connecteur à l'état terminé.

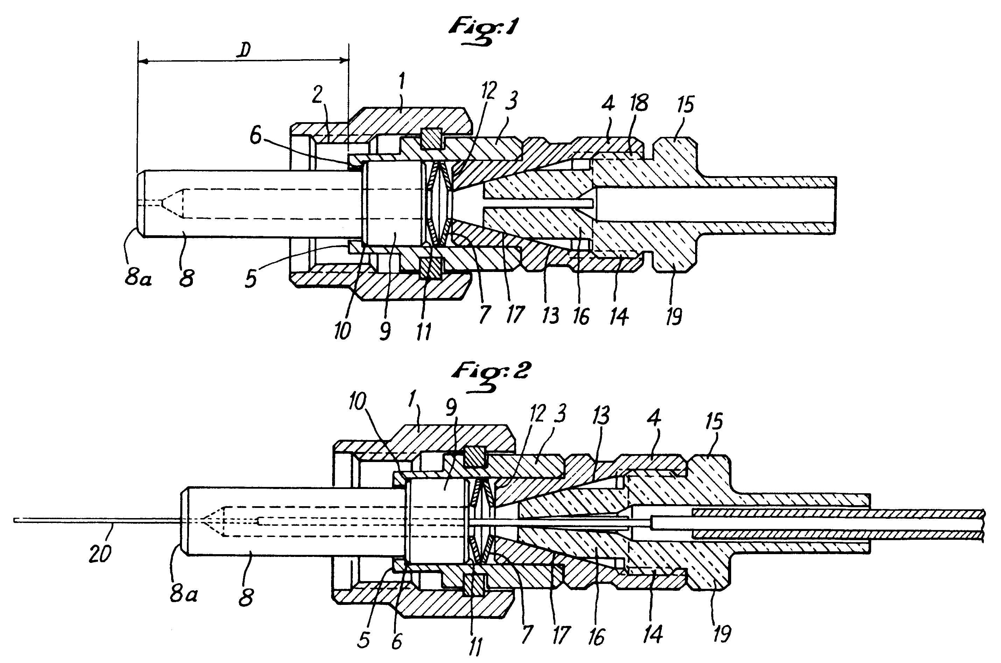

Dans le mode de réalisation des figures 1 à 6, l'élément de connecteur comporte un écrou périphérique 1 muni d'un filetage 2 pour son vissage dans un élément de raccordément (non représenté) dans lequel l'élément de connecteur doit être mis en place après sa préparation en vue de réaliser la connexion de fibres optiques.

L'écrou 1 est mis en place sur un corps constitué de deux parties 3 et 4 solidaires l'une de l'autre par emmanchement dur.

La partie avant du corps se termine par une face frontale 5 constituant la surface de référence de l'élément de connecteur. A l'intérieur de l'alésage de la partie 3 du corps, est réalisée par un décrochement, une surface de butée intérieure 6. Des rondelles élastiques 7 sont en outre logées dans l'alésage de la partie 3 du corps.

Dans cette partie avant 3 du corps, est disposé un embout 8 dépassant axialement de la face frontale 5 du corps et de l'écrou périphérique 1, l'embout comportant à sa partie arrière une collerette 9.

L'embout est logé dans le corps de manière à être en appui par la face frontale 10 de sa collerette 9 contre la surface de butée 6, la face arrière 11 de la collerette 9 étant au contact des rondelles élastiques 7.

La partie arrière 4 du corps de l'élément de connecteur comporte une face frontale 12 réalisant la surface d'appui arrière pour les rondelles élastiques 7. La partie 4 comporte un alésage intérieur présentant une portée tronconique 13 convergeant vers l'avant prolongée vers l'arrière par une portée cylindrique taraudée 14.

Pour réaliser le blocage d'une fibre optique, l'élément de connecteur selon l'invention comporte un organe de blocage arrière 15 présentant une partie avant de serrage 16 munie d'une surface extérieure tronconique 17 et de fentes longitudinales, par exemple au nombre de quatre ou six, permettant d'exercer un effet de pincement élastique radial sur une fibre optique introduite au centre lorsque l'organe de blocage 15 est vissé par une portée filetée 18 dans la portée taraudée 14 jusqu'à ce que sa collerette 19 vienne en appui contre la face arrière de la partie 4 du corps, c'est-à-dire, lors du déplacement de l'organe de blocage arrière entre les positions illustrées aux figures 1 et 2.

Comme on le voit sur la figure 1, il est prévu par construction une distance prédéterminée D entre la face d'extrémité 8a de l'embout 8 et le plan de référence défini par la face d'extrémité 5 de la partie 3 du corps.

Dans la position de l'élément de connecteur de la figure 1, on introduit par l'arrière une fibre optique de manière que son extrémité dénudée 20 fasse largement saillie au-delà de la face d'extrémité frontale 8a de l'embout 8. Dans cette position, on visse l'organe de blocage arrière 15 de manière à bloquer axialement, au niveau de la partie de pince élastique 16 de celui-ci, la fibre dans une partie non dénudée de celle-ci.

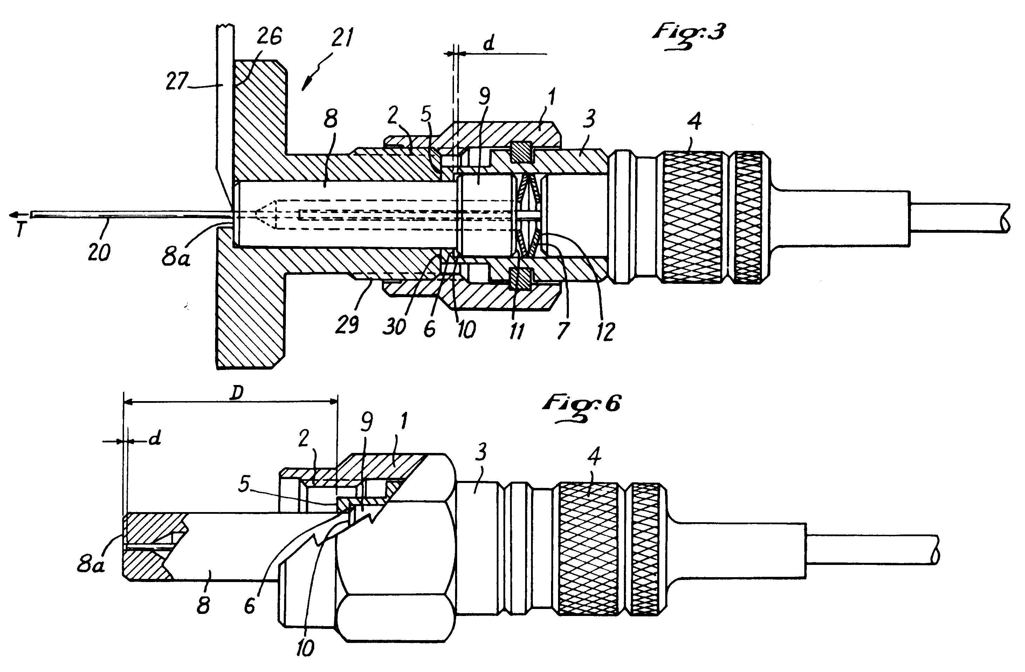

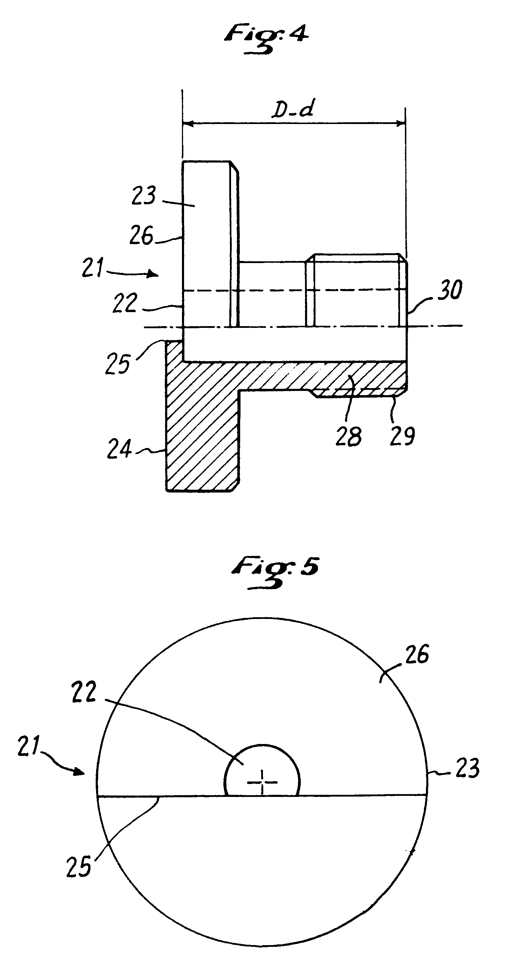

On procède alors au sectionnement de la fibre, comme illustré à la figure 3, en mettant en place un calibre tel qu'illustré aux figures 4 et 5.

Ce calibre désigné globalement par 21 comporte un alésage central 22 de diamètre correspondant au diamètre extérieur de l'embout 8 de manière à permettre un engagement libre du calibre sur l'embout. Le calibre comporte à une extrémité une collerette de grand diamètre 23 présentant une partie en décrochement 24, le plan de décrochement 25 se trouvant en travers de l'alésage 22, en dessous de l'axe de celui-ci. La surface d'extrémité 26 de la collerette 23 constitue une surface de guidage pour un outil tel qu'une plaquette d'alumine 27, illustré à la figure 3, destiné à réaliser une amorce de fracture sous la forme d'une rayure sur l'extrémité dépassante de la partie dénudée 20 de la fibre optique.

Le calibre 21 comporte à son autre extrémité une collerette 28 munie d'un filetage 29 apte à coopérer avec le filetage 2 de l'écrou périphérique 1 de l'élément de connecteur. La surface d'extrémité 30 de la collerette 28 se trouve par construction à une distance prédéterminée D - d de la surface 26, d étant la distance que l'on désire réaliser sur l'élément de connecteur terminé entre l'extrémité de la fibre optique et la face d'extrémité 8a de l'embout, la distance D ayant été définie précédemment.

Comme illustré à la figure 3, le calibre 21 est engagé dans l'écrou périphérique 1 autour de l'embout 8 par vissage des filetages coopérants 2 et 29 jusqu'à ce que sa surface 30 vienne en appui contre la surface 5 de la partie 3 du corps formant surface de référence.

L'embout 8 est, au cours de cette phase de vissage, amené à reculer contre l'effet élastique des rondelles 7, un jeu d, par exemple de 20 μm existant alors entre la surface 10 de la collerette 9 de l'embout et la surface de butée 6 de l'alésage de la partie 3 du corps de l'élément de connecteur.

On réalise alors, à l'aide de l'outil 27, une rayure sur la fibre, en guidant l'outil le long de la surface 26 du calibre au droit de la face d'extrémité 8a de l'embout.

On élimine alors la partie dépassante de la fibre en exerçant dans le sens de la flèche T une traction axiale sur l'extrémité dénudée de la fibre.

Il suffit alors de retirer le calibre et sous l'effet d'appui élastique des rondelles 7, l'embout 8 revient à sa position de départ dans laquelle les surfaces 10 et 6 sont en contact, Dans cette position, la face d'extrémité 8a de l'embout se trouve à la distance D prédéterminée de la surface de référence 5 et l'extrémité de la fibre, comme on le voit sur la figure 6, se trouve en retrait de la distance prédéterminée d de la face d'extrémité de l'embout.

**Revendications**

1. Procédé de mise en place d'une fibre optique dans un élément de connecteur comportant un écrou périphérique d'assemblage, un corps dont la surface d'extrémité frontale définit un plan de référence, muni à son extrémité arrière de moyens de retenue d'une fibre optique introduite par l'arrière dudit corps, un embout dans lequel l'extrémité dénudée de la fibre optique est susceptible d'être positionnée étant logé dans ledit corps et faisant axialement saillie de celui-ci vers l'avant, la face d'extrémité frontale dudit embout se trouvant à une distance axiale prédéterminée (D) dudit plan de référence, l'embout étant mobile axialement par rapport au corps à l'encontre d'un organe élastique de rappel logé dans le corps, caractérisé par le fait qu'après avoir dénudé l'extrémité d'une fibre optique (20) on la met en place par l'arrière dans l'élément de connecteur de manière qu'elle fasse saillie axialement de l'extrémité frontale (8a) de l'embout (8), on immobilise à l'arrière du corps du connecteur la fibre optique dans sa partie non dénudée, on engage sur l'embout (8), de préférence par vissage de l'écrou périphérique d'assemblage (1), un calibre (21) présentant un alésage central (22) de diamètre correspondant au diamètre extérieur de l'embout, le calibre comportant une première surface d'extrémité (30) destinée à venir en appui contre la surface (5) du corps de l'élément de connecteur définissant le plan de référence et une deuxième surface d'extrémité (26) distante de la première d'une distance (D-d), inférieure d'une valeur prédéterminée (d) à la distance de référence (D) sur l'élément de connecteur entre la face frontale (8a) de l'embout et le plan de référence (5) de manière que lorsque le calibre est engagé, l'embout se trouve reculé par rapport au corps de ladite valeur de différence prédéterminée (d) on réalise dans cette position, sur la fibre (20) en saillie du calibre, le long de la seconde surface d'extrémité (26) de celui-ci, une rayure à l'aide d'un outil approprié (27), on exerce une traction axiale sur la fibre pour fracturer celle-ci au niveau de la rayure, après quoi, on retire ledit calibre, l'embout revenant sous l'effet de l'organe d'appui élastique (7) dans sa position initiale, l'extrémité de la fibre optique se trouvant alors en retrait de l'extrémité (8a) de l'embout d'une distance correspondant à ladite valeur de différence prédéterminée (d).

2. Procédé selon la revendication 1, caractérisé par le fait que l'on immobilise la fibre optique dans sa partie non dénudée à l'arrière du corps de connecteur par serrage mécanique.

3. Dispositif pour la mise en ouvre du procédé selon la revendication 1, le dispositif comprenant un élément de connecteur comportant un écrou périphérique d'assemblage, un corps dont la surface d'extrémité frontale définit un plan de référence, muni à son extrémité arrière de moyens de retenue d'une fibre optique introduite par l'arrière dudit corps, un embout dans lequel l'extrémité dénudée de la fibre optique est susceptible d'être positionnée étant logé dans ledit corps et faisant axialement saillie de celui-ci vers l'avant, la face d'extrémité frontale dudit embout se trouvant à une distance axiale prédéterminée dudit plan de référence, l'embout étant mobile axialement par rapport au corps à l'encontre d'un organe élastique de rappel logé dans le corps, caractérisé par le fait qu'il comporte un calibre (21) présentant un alésage central (22) de diamètre correspondant au diamètre extérieur de l'embout (8), le calibre comportant une première surface d'extrémité (30) destinée à venir en appui contre la surface (5) du corps de l'élément de connecteur définissant le plan de référence et une deuxième surface d'extrémité (26) distante dela première d'une distance (D - d), inférieure d'une valeur prédéterminée (d) à la distance de référence (D) sur l'élément de connecteur entre la face frontale (8a) de l'embout et le plan de référence (5) de manière que lorsque le calibre est engagé, l'embout se trouve reculé par rapport au corps de ladite valeur de différence prédéterminée (d), l'embout (8) présentant à son extrémité arrière une collerette annulaire (9) de plus grand diamètre, dont la face frontale (10) est susceptible après enlèvement du calibre (21) de venir en appui contre une surface de butée (6) formée par un décrochement de l'alésage du corps (3,4) de l'élément de connecteur sous l'action d'un organe élastique (7) logé dans le corps en appui axial contre la face arrière (11) de ladite collerette.

4. Dispositif selon la revendication 3, caractérisé par le fait que ledit organe élastique est constitué par des rondelles élastiques (7).

5. Dispositif selon l'une quelconque des revendications 3 et 4, caractérisé par le fait qu'il comporte un organe de blocage engagé dans la partie arrière (4) du corps de l'élément de connecteur pour immobiliser une fibre optique introduite par l'arrière dans l'élément de connecteur, au niveau de sa partie non dénudée,

6. Dispositif selon la revendication 5, caractérisé par le fait que l'organe de blocage comporte une partie tubulaire fendue de serrage (16) présentant une surface extérieure tronconique (17) coopérant avec la surface (13) d'un alésage tronconique réalisé à la partie arrière (4) du corps, l'organe de blocage et la partie arrière (4) du corps comportant des filetages coopérants (14, 18).

## Claims

1. Method for installing an optical fibre in a connector element including a peripheral assembly nut, a body, the front end surface of which defines a reference plane, which body is fitted at its rear end with means for retaining an optical fibre inserted via the rear of the said body, a ferrule, into which the stripped end of the optical fibre is capable of being positioned, being housed in the said body and projecting axially forwards from the latter, the front end face of the said ferrule being situated at a predetermined axial distance (D) from the said reference plane, the ferrule being axially movable in relation to the body in opposition to an elastic return member housed in the body, characterised in that, after the end of an optical fibre (20) has been stripped, it is installed via the rear in the connector element so that it projects axially from the front end (8a) of the ferrule (8), the optical fibre at its non-stripped portion is immobilized at the rear of the body of the connector, onto the ferrule (8), is engaged, preferably by screwing the peripheral assembly nut (1), a gauge (21) having a central bore (22) of diameter corresponding to the outer diameter of the ferrule, the gauge including a first end surface (30) intended to bear against the surface (5) of the body of the connector element defining the reference plane and a second end surface (26) which is separated from the first surface by a distance (D-d) which is a predetermined value (d) less than the reference distance (D) on the connector element between the front face (8a) of the ferrule and the reference plane (5) so that, when the gauge is engaged, the ferrule is situated set back in relation to the body by the said predetermined difference value (d), a score mark is made, in this position, on the fibre (20) projecting from the gauge, over the length of the second end surface (26) of the latter, with the aid of a suitable tool (27), an axial tensile stress is exerted on the fibre in order to fracture the latter in the region of the score mark, after which, the said gauge is removed, the ferrule returning under the effect of the elastic bearing member (7) into its initial position, the end of the optical fibre then being situated set back from the end (8a) of the ferrule by a distance corresponding to the said predetermined difference value (d).

2. Method according to Claim 1, characterised in that the optical fibre at its non-stripped portion is immobilized at the rear of the connector body by mechanical clamping.

3. Device for the implementation of the method according to Claim 1, the device comprising a connector element including a peripheral assembly nut, a body, the front end surface of which defines a reference plane, which body is fitted at its rear end with means for retaining an optical fibre inserted via the rear of the said body, an ferrule, into which the stripped end of the optical fibre is capable of being positioned, being housed in the said body and projecting axially forwards from the latter, the front end face of the said ferrule being situated at a predetermined axial distance from the said reference plane, the ferrule being axially movable in relation to the body in opposition to an elastic return member housed in the body, characterised in that it includes a gauge (21) having a central bore (22) of diameter corresponding to the outer diameter of the ferrule (8), the gauge including a first end surface (30) intended to bear against the surface (5) of the body of the connector element defining the reference plane and a second end surface (26) which is separated from the first surface by a distance (D-d), which is a predetermined value (d) less than the reference distance (D) on the connector element between the front face (8a) of the ferrule and the reference plane (5) so that, when the gauge is engaged, the ferrule is situated set back in relation to the body by the said predetermined difference value (d), the ferrule (8) having at its rear end an annular collar (9) of larger diameter, the front face (10) of which is capable, after removal of the gauge (21), of bearing against a stop surface (6), formed by a step of the bore of the body (3, 4) of the connector element, under the action of an elastic member (7) housed in the body bearing axially against the rear face (11) of the said collar.

4. Device according to Claim 3, characterised in that the said elastic member is constituted by spring washers (7).

5. Device according to either one of Claims 3 and 4, characterised in that it includes a locking member engaged at the rear portion (4) of the body of the connector element in order to immobilize an optical fibre, inserted via the rear into the connector element, in the region of its non-stripped portion.

6. Device according to Claim 5, characterised in that the locking member includes a split tubular clamping portion (16) having a frustoconical outer surface (17) interacting with the surface (13) of a frustoconical bore made at the rear portion (4) of the body, the locking member and the rear portion (4) of the body comprising interacting threads (14, 18).

**Patentansprüche**

1. Verfahren zum Einbringen einer optischen Faser in ein Anschlußelement, umfassend eine periphere Montagemutter, einen Körper, von dem die Stirnendseite eine Bezugsebene definiert, versehen an seinem rückwärtigen Ende mit Rückhaltemitteln für eine von der Rückseite des Körpers eingeführte optische Faser, und ein Ansatzstück, in dem das freigelegte Ende der optischen Faser in der Lage ist, positioniert zu werden, das im Körper untergebracht ist und nach vorne von diesem axial vorspringt, wobei sich die Stirnendseite des Ansatzstücks in einem vorbestimmten axialen Abstand (D) von der Bezugsebene befindet und das Ansatzstück axial bezüglich des Körpers gegen ein im Körper angebrachtes elastisches Rückholorgan beweglich ist,
dadurch gekennzeichnet,
daß, nachdem das Ende einer optischen Faser (20) freigelegt worden ist, es von der Rückseite in das Anschlußelement auf solche Weise eingebracht wird, daß es vom Stirnende (8a) des Ansatzstücks (8) axial vorspringt, die optische Faser in ihrem nicht freigelegten Teil von der Rückseite des Körpers des Anschlußstücks festgelegt wird,
daß vorzugsweise durch Verschrauben der peripheren Montagemutter (1) auf dem Ansatzstück (8) ein Maßstück (21) in Eingriff gebracht wird, das eine zentrale Bohrung (22) mit Durchmesser entsprechend dem Außendurchmesser des Ansatzstücks aufweist, wobei das Maßstück eine erste Endfläche (30), die bestimmt ist, in Anlage gegen die die Bezugsebene definierende Fläche (5) des Körpers des Anschlußelementes zu gelangen, und eine zweite Endfläche (26) aufweist, die von der ersten um einen Abstand (D-d) entfernt ist, der um einen vorbestimmten Wert (d) kleiner als der Bezugsabstand (D) ist, auf das Anschlußelement zwischen der Stirnseite (8a) des Ansatzstücks und der Bezugsebene (5) derart, daß, wenn sich das Maßstück in Eingriff befindet, sich das Ansatzstück in bezug auf den Körper um den Wert vorbestimmter Differenz (d) zurückgestellt befindet,
daß in dieser Position auf der Faser (20) vorspringend vom Maßstück, längs dessen zweiter Endfläche (26) mittels eines geeigneten Werkzeuges (27) eine Riefe ausgeführt wird,
daß auf die Faser ein axialer Zug ausgeübt wird, um diese in der Höhe der Riefe aufzubrechen, wonach das Maßstück zurückgezogen wird, wobei das Ansatzstück unter der Wirkung des elastischen Rückholorgans (7) in seine Anfangsposition zurückkehrt, wobei sich nun das Ende der optischen Faser in Rücksprung zum Ende (8a) des Ansatzstücks um einen Abstand entsprechend dem Wert vorbestimmter Differenz (d) befindet.

2. Verfahren nach Anspruch 1, dadurch gekennzeichnet, daß die optische Faser in ihrem nicht freigelegten Teil auf der Rückseite des Anschlußkörpers durch mechanisches Pressen festgelegt wird.

3. Vorrichtung zur Ausführung des Verfahrens nach Anspruch 1, welche Vorrichtung ein Anschlußelement aufweist, umfassend eine periphere Montagemutter, einen Körper, von dem die Stirnendseite eine Bezugsebene definiert, versehen an seinem rückwärtigen Ende mit Rückhaltemitteln für eine von der Rückseite des Körpers eingeführte optische Faser, und ein Ansatzstück, in dem das freigelegte Ende der optischen Faser in der Lage ist, positioniert zu werden, das im Körper untergebracht ist und nach vorne von diesem axial vorspringt, wobei sich die Stirnendseite des Ansatzstücks in einem vorbestimmten axialen Abstand von der Bezugsebene befindet und das Ansatzstück axial bezüglich des Körpers gegen ein im Körper angebrachtes elastisches Rückholorgan beweglich ist,
dadurch gekennzeichnet,
daß sie ein Maßstück (21) mit einer zentralen Bohrung (22) eines dem Außendurchmesser des Ansatzstücks (8) entsprechenden Durchmessers enthält, wobei das Maßstück eine erste Endfläche (30), die bestimmt ist, in Anlage gegen die die Bezugsebene definierende Fläche (5) des Körpers des Anschlußelementes zu gelangen, und eine zweite Endfläche (26) aufweist, die von der ersten um einen Abstand (D-d) entfernt ist, der um einen vorbestimmten Wert (d) kleiner als der Bezugsabstand (D) ist, auf das Anschlußelement zwischen der Stirnseite (8a) des Ansatzstücks und der Bezugsebene (5) derart, daß, wenn sich das Maßstück in Eingriff befindet, sich das Ansatzstück in bezug auf den Körper um den Wert vorbestimmter Differenz (d) zurückgestellt befindet, wobei das Ansatzstück (8) an seinem hinteren Ende einen Ringkragen (9) größeren Durchmessers hat, dessen Frontfläche (10) geeignet ist, nach Wegnahme des Maßstücks (21) in Anlage gegen eine Anschlagsfläche (6) zu kommen, die durch Aushaken der Bohrung des Körpers (3, 4) des Anschlußelementes unter der Wirkung eines elastischen Organs (7) gebildet wird, das im Körper in axialer Anlage gegen die Rückfläche (11) des Kragens angebracht ist.

4. Vorrichtung nach Anspruch 3, dadurch gekennzeichnet, daß das elastische Organ durch elastische Scheiben (7) gebildet ist.

5. Vorrichtung nach einem beliebigen der Ansprüche 3 und 4, dadurch gekennzeichnet, daß es ein Verriegelungsorgan in Eingriff im rückwärtigen Teil (4) des Körpers des Anschlußelementes umfaßt, um eine von der Rückseite in das Anschlußelement eingeführte optische Faser in der Höhe ihres nicht freigelegten Teils festzulegen.

6. Vorrichtung nach Anspruch 5, dadurch gekennzeichnet, daß das Verriegelungsorgan einen geschlitzten rohrförmigen Klemmteil (16) umfaßt, der eine kegelstumpfartige Außenfläche (17) aufweist, die mit der Fläche (13) einer am rückwärtigen Teil (4) des Körpers ausgeführten kegelstumpfartigen Bohrung zusammenwirkt, wobei das Verriegelungsorgan und der rückwärtige Teil (4) des Körpers zusammenwirkende Gewinde (14, 18) aufweisen.

EP 0 294 270 B1

Fig.1

Fig.2

8

Fig.3

Fig.6

*Fig. 4*

D_d

23

26

21

22

30

25

28  29

24

*Fig. 5*

26

22

21

23

25